# EUROPEAN PATENT APPLICATION

(11) **EP 4 400 649 A1**
(43) Date of publication of application: **17.07.2024**
(21) Application number: 23151332.6
(22) Date of filing: 12.01.2023
(51) Int. Cl.: D21H 19/10, B44C 5/04, D21H 27/18, D21H 27/30

(54) **A DECORATIVE PANEL AND A DECORATIVE FOIL A DECORATIVE PANEL**

(71) Applicant: Unilin, BV, 8710 Wielsbeke (BE)
(72) Inventor: CLEMENT, Mr. Benjamin, 8790 Waregem (BE)
(74) Representative: Unilin Technologies

(57) **Abstract**

A décor paper (3) for decorative panel comprising:
- a base paper (4);
- an ink receiver coating (5) covering at least one surface of said base paper (5);
- a decorative pattern (2) printed on said ink receiver coating (5);
the décor paper (3) further comprises one or more of the following features:
- the ink receiver coating (5) is present in a dry weight amount below 2 g/sqm (grams per square meter), preferably below 1 g/sqm;
- the ink receiver coating (5) is free from pigment or water-absorbing particles, like mineral particles especially silica;
- the decorative pattern (2) is formed by pigments, preferably organic pigments, and it is formed by a dry weight amount of pigment below 5 g/sqm, more preferably below 3 g/sqm;
- the base paper (4) is a colored paper;
- the base paper (4) comprises a mean air resistance, es expressed in Gurley value between 10 and 30 seconds and/or the mean air resistance of the base paper provided with the ink receiver coating can be between 10 and 25 seconds.

## Description

The present invention relates to decorative panels having a decorative surface, for example laminate panels of the type of CPL (compact laminate) or HPL (high pressure laminate). The present invention can be of particular interest for decorative panels used in outdoor application. The invention also relates to decorative foils for manufacturing the decorative panels

More particularly the invention is related to decorative panels comprising a substrate material and a provided thereon top layer with a printed decor. The top layer is formed by thermosetting and/or radiation curable resin and one or more paper layers, wherein said paper layers comprise at least one decor paper having a printed pattern. The panels of the invention may relate to furniture panels, ceiling panels, flooring panels or similar, wherein these panels preferably comprise a wood based substrate, such as an MDF or HDF substrate (Medium or High Density Fiberboard) or a substrate material consisting of, or essentially made of, a wood-based or cellulose-based board like, for example a compact board which is made by multiple resin impregnated kraft paper foils. Alternatively, the panels can comprise a polymeric based substrate, preferably thermoplastic based substrate, such as PVC (Polyvinyl chloride), PP (Polypropylene), LVT (Luxury Vinyl Tile), SPC (Solid Polymer Composite) or WPC (Wood polymer composite) based substrate. The invention can further relate to mineral-based board of cement-based board, like for example, fiber cement-based board or magnesium oxide based board.

The décor is printed on paper by means of offset or rotogravure printing, or even by means of inkjet digital printing. The obtained paper is taken up as a decorative paper in a so-called laminate panel. For manufacturing the panels, the DPL process can be practiced. According to the DPL process (Direct Pressure Laminate) the already printed paper or decorative paper is provided with melamine resin to form a decorative layer. Afterwards a stack is formed comprising at least a plate shaped substrate, said decorative layer and possibly a protective layer on top of said decorative layer, wherein said protective layer or overlay is based on resin and/or paper as well. Said stack is pressed and the press treatment results in a mutual connection or adherence of the decorative paper, the substrate and the protective layer, as well as in a hardening of the resin present in the stack. As a result of the pressing operation a decorative panel is obtained having a resin covered surface, which can be highly wear resistant. For examples of a DPL process reference is made to EP 1 290 290. In case of HPL or CPL the decorative paper and optionally the wear layer is pressed on kraft paper.

EP 1 044 822, EP 1 749 676 and EP 2 274 485 disclose the use of an inkjet receiver coating to enhance the printing quality on a raw decor paper. Such inkjet receiver coating comprises pigments, especially silica, and a crosslinked polymer such as polyvinyl alcohol (PVA). During private research, the inventor has also encountered problems with subsequent impregnation and lamination of printed paper. In particular, the inventor has encountered problems with water resistance of the décor paper during lamination under heat in presence of a polycondensation curing resin like melamine. Water resistance for laminate panel is defined by norm EN 438 and is measured according to two different tests:
- immersion of a specimen in boiling water for two hours, water resistance is determined by the increase of mass and thickness of the specimen and by changing of appearance thereof;
- exposure of the surface of a specimen to water vapor for a predetermined amount of time, water resistance is determined by the increase thickness of the specimen and by changing of appearance thereof.
The inventor has noticed that decor paper provided with inkjet receiver layer are more prone to fail these tests since boiling water and water vapor seem to affect the interaction between the inkjet receiver layer and the ink and the interphase between the décor paper and the overlay. WO 2022/157613 discloses a solution for improving the water resistance of the décor paper during lamination by selecting a specific resin composition for the impregnation.

In view of the intrinsic low water resistance of the décor paper, this kind of decorative panels are used, almost exclusively, for indoor applications, for example for floor or furniture.

The present invention aims in the first place at an alternative method for manufacturing panels having a decorative surface or paper, for use in such panels, and seeks, in accordance with several of its preferred embodiments, to solve one or more of the problems arising in the state of the art.

Therefore, the present invention, in accordance with its first independent aspect, relates to a décor paper for decorative panel comprising:
- a base paper;
- an ink receiver coating covering at least one surface of said base paper;
- a decorative pattern printed on said ink receiver coating.
The first independent aspect of the invention relates to several measures that singularly, or in combination with each other, can enable an industrial and reliable application of a décor paper in the production of decorative panels for outdoor applications.

According to a first measure the ink receiver coating is provided in a dry weight amount below 2 g/sqm (grams per square meter), preferably below 1 g/sqm. During private research the inventors have found that theink receiver coating can represent an obstacle for the impregnation of the paper, by limiting the amount of ink receiver coating the impregnability of the décor paper is improved. The inventors have surprisingly found that thanks to improved impregnation performances, the subsequent bonding of the décor paper on the substrate is optimized and it is minimized the possibility that the water from atmospheric phenomenon penetrates the paper causing haziness, color fading, cracking, gloss difference or other differences.

According to a second measure the ink receiver coating is free from pigment or water-absorbing particles, like mineral particles especially silica. It is noted that usually, in the state of the art, ink receiver coating compositions comprise water-absorbing particles, normally mineral particles like silica or silicon aluminate particles, which have the aim of absorbing the liquid part of the ink, normally water or a solvent, thereby helping the precipitation of the pigment of the ink itself. Preferred examples of water absorbing particles which are excluded from the composition of the ink receiver coating are chosen from the list comprising: calcium carbonate, silica, alumina, aluminosilicates, ordered mesoporous materials, modified silica, organosilica, modified organosilica, organoalumina, modified alumina, aluminates, modified aluminates, organoaluminates, modified organoaluminates, zeolites, metal organic frameworks and porous polar polymers. Thanks to the exclusion of this particles from the composition of the ink receiver coating it is reduced the possibility of absorbing water coming from atmosphere thereby improving the outdoor performance.

The ink receiver coating can preferably comprise at least a binder and a flocculant.

Preferably, said paper is provided with 0.1 to 2 g/sqm, and preferably between 0.1 and 1 g/sqm, dry coating weight of a binder in said ink receiver coating. According to the most preferred embodiment, for the binder in said ink receiver coating at least or mainly polyvinyl alcohols are used.

According to variants, the ink receiver coating includes, as a binder, a polymer selected from the group consisting of hydroxyethyl cellulose; hydroxypropyl cellulose; hydroxyethylmethyl cellulose; hydroxypropyl methyl cellulose; hydroxybutylmethyl cellulose; methyl cellulose; sodium carboxymethyl cellulose; sodium carboxymethylhydroxethyl cellulose; water soluble ethylhydroxyethyl cellulose; cellulose sulfate; vinylalcohol copolymers; polyvinyl acetate; polyvinyl acetal; polyvinyl pyrrolidone; polyacrylamide; acrylamide/acrylic acid copolymer; polystyrene, styrene copolymers; acrylic or methacrylic polymers; styrene/acrylic copolymers; ethylene-vinylacetate copolymer; vinyl-methyl ether/maleic acid copolymer; poly(2-acrylamido-2-methyl propane sulfonic acid); poly(diethylene triamine-co-adipic acid); polyvinyl pyridine; polyvinyl imidazole; polyethylene imine epichlorohydrin modified; polyethylene imine ethoxylated; ether bond-containing polymers such as polyethylene oxide (PEO), polypropylene oxide (PPO), polyethylene glycol (PEG) and polyvinyl ether (PVE); polyurethane; melamine resins; gelatin; carrageenan; dextran; gum arabic; casein; pectin; albumin; chitins; chitosans; starch; collagen derivatives; collodion and agar-agar. The most preferred variants for the binder are polyvinyl acetates, ethylvinylacetates, block copolymers based on polyvinylacetate, block copolymers based on polyvinylalcohol, acrylates, latexes, polyvinyl derivaties, VCVAC derivatives, polyurethanes based on polyols and isocyanates, polyurethanes based on polycarbamates and polyaldehydes, e.g. both as a watery dispersion/emulsion or a watery or solvent solution.

As stated above preferred binders for the ink receiving layer include polyvinyl alcohol (PVA), but according to variants a vinylalcohol copolymer or modified polyvinyl alcohol may be applied. The modified polyvinyl alcohol may be a cationic type polyvinyl alcohol, such as the cationic polyvinyl alcohol grades from Kuraray, such as POVAL C506, POVAL C118 from Nippon Goshei.

The flocculant can be in form of a metal salt, preferably a cationic metal salt. Preferably said metal salt is chosen from the list consisting of CaCl₂, MgCl₂, CaBr₂, MgBr₂, CMA (Calcium Magnesium Acetate), NH₄Cl, Calcium Acetate, ZrCl₄, calcium nitrate and Magnesium Acetate. The positive ion of the dissolved metal salt will tend to neutralize the electrosteric stabilization function of the pigment contained in the ink thereby improving its absorption. The most preferred cationic metal salts are CaCl₂, MgCl₂, CMA, Calcium Acetate, calcium nitrate and Magnesium Acetate, as the inventors have obtained the best results with these ink reactive compounds. Said flocculant can also be chosen from the list consisting of sodiumaluminate, a double sulphate salt such as alum, polyaluminumchloride, polyacrylate, dicyandiamide (e.g. Floquat DI5 from SNF) and polyacrylamide. The flocculating agent pulls the ink pigments out of the ink dispersion. Thereby the pigments are prevented from penetration to far down into the ink receiver coating. Mainly the vehicle of the ink, e.g. the water in the case of water-based inks, is absorbed deeper down into the ink receiver coating.

Preferably, ink receiver coating is provided with 20 to 75 %, based on dry coating weight of flocculating agent, in particular of metal salt. It is noted that, in case of absence of water-absorbing particles, as per the second measure of the first aspect, the content of flocculant can be as higher as possible to improve the immediate precipitation of the pigment.

The ink receiver coating can further comprise a crosslinking agent. Preferably, the ink receiver coating can preferably comprise a content of crosslinking agent below 5 % based on dry weight of the composition. The crosslinking agent can be preferably selected from the group comprising: aldehydes, polyaldehydes, dialdehydes, alcohols, boronic acid, borax, polyalcohols, carbamates, polycarbamates, carbonic acids, glyoxal based agent, zirconium-based agents, titanates and polycarbonic acids.

The ink receiver coating may also comprise one or more of the following agents:
- Agents altering, more particularly lowering, the pH of said ink receiver coating. Preferably the pH of the ink receiver coating composition is lowered to pH 5 or lower, by selecting the amount and type of said substance, which selection is within the ambit of the skilled man. Preferably said substance is chosen from the list consisting of formic acid, tartaric acid, acetic acid, hydrochloric acid, citric acid, phosphoric acid, sulfuric acid, AlCl₃ and boronic acid. An adjusted, more particularly lowered pH, preferably to pH 5 or less, increases the chemical affinity of the inkjet receiver coating with the ink and will interfere with the electrosteric stabilization function on the pigment, such that the dispersion of the pigments in the ink will become destabilized quickly.
- Additives: wetting agent between 0.005 and 1 g/sqm, preferably between 0.05 and 0.2 g/sqm; and/or defoaming agent between 0.005 and 1 g/sqm, preferably between 0.05 and 0.2 g/sqm; and/or fungicide between 0.005 and 1 g/sqm, preferably between 0.05 and 0.2 g/sqm.

According to the most preferred embodiment said inkjet receiver coating is present on the décor paper in the form of a unique layer having the inkjet receiving coating composition.

According to a third measure of the invention, the decorative pattern can be formed by pigments, preferably organic pigments, and it is formed by a dry weight amount of pigment below 5 g/sqm, more preferably below 3 g/sqm. Pigments are particles that can form a barrier for the impregnation of the paper. By reducing the dry weight amount of pigments on the paper, the impregnation capability thereof is consequently improved and the resulting laminate can be substantially free of weak-points against water coming from weathering.

The pigment can be preferably selected from the group comprising cyan, yellow, magenta, red and black pigment. In case the decorative pattern represents a wood décor, it is preferable that the magenta pigments are partially or even more preferably completely substituted by red pigments. In fact, a set of inks formed by cyan, yellow, red and black inks can lead to a decorative pattern imitating a wood with a reduced pigment content than a set of inks formed by cyan, yellow, magenta and black inks, which represent the typical ink set of an inkjet printer. Preferred examples of red inks are those comprising one or more pigments selected from the group comprising: C.I. pigment red 144, C.I. pigment red 254, C.I. pigment red 176, C.I. pigment red 202, C.I. pigment red 207, C.I. pigment violet 19, C.I. pigment violet 32, or mixed crystal thereof. Preferred example of yellow inks are those comprising one or more pigments selected from the group comprising: C.I. pigment yellow 110, C.I. pigment yellow 150, C.I. pigment yellow 93, C.I. pigment yellow 139, C.I. pigment yellow 155, C.I. pigment yellow 181 or a mixed crystal thereof. Cyan ink can preferably comprise a copper phthalocyanine pigment. Black ink preferably comprises a carbon black pigment.

The decorative pattern is preferably obtained by printing water-based inks. Preferably said inks are free from binders or comprise a binder content below 3% weight. Binders that are usually contained in the inks are polymeric substances which have the scope of fixing the pigment on the surface of the paper thereby avoiding the bleeding of the ink into the paper and improving the color intensity of the décor. Anyway, inventors have found that these kinds of binders can cause the creation of a film on the upper surface of the paper that can provide a barrier effect against impregnation. Also, for this reason, water-based inks are preferred above curable inks (e.g. UV inks) which are characterized by a high binder content.

Preferably the decorative pattern can cover the majority, preferably at least at least the 70% or at least the 90%, of the surface of the paper. In some embodiments the decorative pattern can be printed with a resolution of at least 200 dpi.

According to a fourth measure of the invention the base paper can be a colored paper. The color of the paper be configured to reduce the amount of pigment needed to obtain the decorative pattern. In the most preferred embodiment, the base paper can show a lightfastness of at least 6 on the blue wool scale according to the ISO 105-B02:2014 or EN438/2. Such lightfastness can contribute to the reduction of color fading of the decorative pattern when this is used in outdoor applications.

In the preferred embodiments the base paper is a décor paper suitable for being impregnated with a thermosetting resin and possibly a rotogravure printable paper. Preferably the base paper can comprise a weight between 50 and 120 g/sqm, preferably between 60 and 80 g/sqm, for example 70 g/sqm.

According to a fifth measure, base paper can comprise a mean air resistance, as expressed in Gurley value between 10 and 30 seconds. Preferably, the mean air resistance of the paper provided with the ink receiver coating can be between 10 and 25 seconds, more preferably between 10 and 20 seconds. Such a relatively low value for a coated paper provides for an optimized impregnability of the paper itself.

It is noted that in some embodiment of the invention, said measures from the first to the fifth can be combined eacho other according to several possible combinations. Preferably, said measures from the first to the fifth can be combined all together in a preferred embodiment of the invention.

A second aspect of the invention relates to a coated décor paper for decorative panel that comprises a décor paper having a decorative pattern, preferably but not necessarily being according to the first independent aspect of the invention, and comprising a protective coating above said decorative pattern. According to said second aspect the protective coating shows a thickness of at least 50 microns. This protective coating can have the effect of sealing the surface of the paper to protecting it from weathering. It is noted that the coating is particularly effective when used in combination with a décor paper according to the first aspect because thanks to the described measures the décor paper itself is particularly adapted to be coated.

The protective coating can be made of a resin, preferably a curable or cured resin. The resin can comprise, for example, acrylic resin, polyurethane resin or a mixture thereof. Said resin can be UV (ultraviolet), EB (electron beam) or heat cured or curable.

Advantageously, the protective coating can comprise UV absorbers or UV stabilizers to reduce color fading caused by weathering. Examples of UV absorbers are those belonging to the triazine family or benzotriazole family or basic hindered amine light stabilizer (HALS)family or mixtures, such as Tinuvin 5050, Tinuvin 477, Tinuvin 292, Tinuvin 1130.

In some embodiment, décor paper can be impregnated with a resin having one or more features in common with the resin of the protective coating. For example, said resin impregnating the décor paper can comprise acrylic resin, polyurethane resin or a mixture thereof and/or can comprise UV absorber or UV stabilizers.

It is noted that the invention also relates to a decorative panel comprising a décor paper according to the first independent aspect of the invention and/or a coated décor paper according to the second independent aspect. Said panel comprising a substrate, for example made of multiple thermosetting resin impregnated kraft paper foils, mineral board, thermoplastic material board, thermosetting material boards or wood-based boards. The panel can also comprise a balancing layer attached to the substrate on an opposite face to top layer having the décor paper.

The invention can also relate to a method for manufacturing said coated paper of the second independent aspect. Therefore, a third independent aspect of the invention relates to a method for manufacturing a coated décor paper for a decorative panel comprising the steps of providing a décor paper having a decorative pattern, for example according to the first independent aspect, and the step of providing a protective coating above said decorative pattern.

Preferably said step of providing the protective coating can comprises coating the décor paper with a liquid composition of the curable resin and then comprises the step of curing said resin, for example by exposure to UV or EB radiation or to heat. Alternatively, the protective coating can be provided in the form of sheet or film made by, or treated with, the resin composition.

The invention also relates to a method for manufacturing a decorative comprising the décor paper of the first independent aspect and or a coated décor paper of the second aspect. Thereto, a fourth embodiment of the invention relates to a method for manufacturing a panel comprising the steps of: forming a stack comprising a substrate, a décor paper, preferably according to the first independent aspect, said décor paper having a decorative pattern and a coating above said decorative pattern, preferably asper the second independent aspect, and optionally a balancing layer. The method further comprises the step consolidating said stack into a decorative panel via the application of heat and pressure.

Preferably, said pressing is performed at a temperature between 100 and 200°C, more preferably between 120 and 190°C.

In some embodiments the décor paper can be dry pressed, in the sense that can be provided in the stack a non-impregnated form and that receives the resin for bonding with other layers via application of pressure. This is particularly the case of CPL laminates, or compact boards/ laminates made in a multidaylight press where the substrate is formed by multiple impregnated kraft paper foils.

In other embodiments the décor paper can be impregnated with a thermosetting resin composition before being provided in the stack. Said thermosetting resin composition can comprise melamine formaldehyde resin, acrylic resin, polyurethane resin or mixtures thereof.

With the intention of better showing the characteristics according to the invention, in the following, as an example without limitative character, an embodiment is described, with reference to the accompanying drawings, wherein:

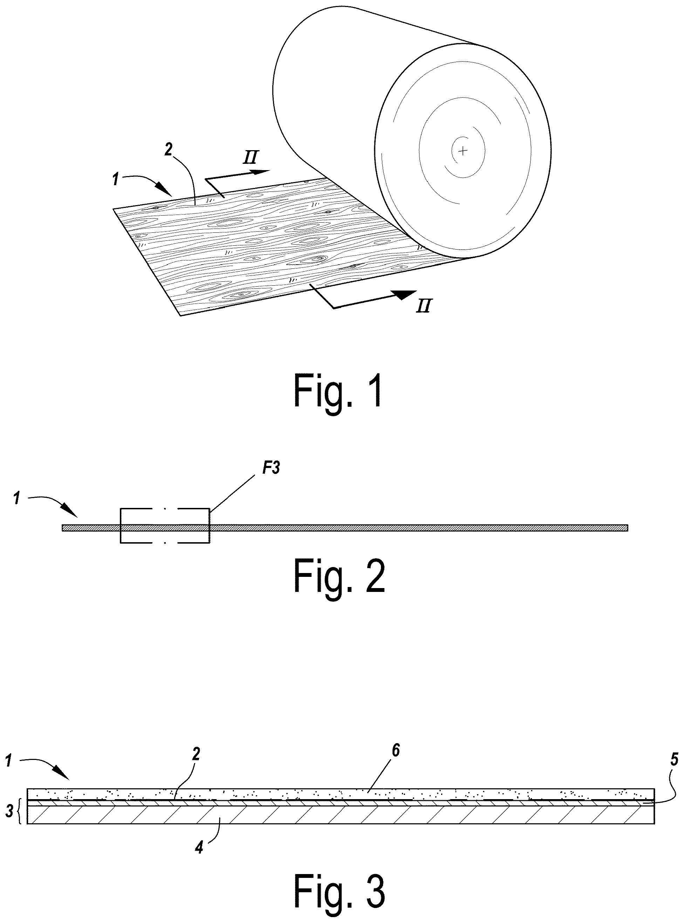

figure 1 schematically shows a perspective view of a coated décor paper in accordance with an embodiment of the invention;
figure 2 on a larger scale provides a view of the cross section along the line II-II of figure 1;
figure 3 on a larger scale provides a view on the area F3 of figure 2;
figure 4 shows some steps in a method in accordance with an aspect of the invention;
figure 5 shows, in perspective view, a panel obtained by means of the method of figure 4;
figure 6 shows a view according to the line VI-VI indicated on figure 5.

Figures from 1 to 3 schematically illustrate a coated décor paper 1 according to the invention. The coated décor paper 1 comprises a decorative pattern 2 that has been printed with an inkjet printer and that in the example represents a wood décor.

The coated décor paper 1 comprises a décor paper 3 that is formed by a base paper 4, an ink receiver coating 5 and the decorative pattern 2. The coated décor paper 1 further comprises a protective coating 6 above said decorative pattern 2.

The base paper 4 is a brown colored paper showing a lightfastness according to the blue wool scale of 6. The base paper comprises a weight of 70 g/sqm.

The ink receiver coating 5 is present on the upper surface of said base paper 4 in a dry amount of 1 g/sqm. The ink receiver coating 5 comprises PVA (polyvinyl alcohol) as a binder and CaCl₂ (calcium chloride) as a flocculant. In particular, the binder forms from the 50 to 95% weight, the flocculant forms from 5 to 50 % weight of the ink receiver coating 5. The ink receiver coating 5 comprises also a wetting agent from 0,02 to 0,5 % weight and antifoam agent from 0,02 to 0,5 % weight.

The decorative pattern 2 covers more than the 70%, in the example the entirety, of the surface of the décor paper 3. The decorative pattern 2 is formed by organic pigments in the colors cyan, red, yellow and black. The total dry amount of pigment for forming the decorative pattern is 1 g/sqm.

The protective coating 6, which is transparent, has a thickness of 70microns, and is formed by an UV cured acrylic resin comprising UV absorber and UV stabilizer.

The coated décor paper 1 of the example has been subjected to an artificial weathering test according to EN 4382:29 and reached a grade 4 after 3000 hours of exposure, whereas conventional décor paper for decorative panel fails after 500 hours.

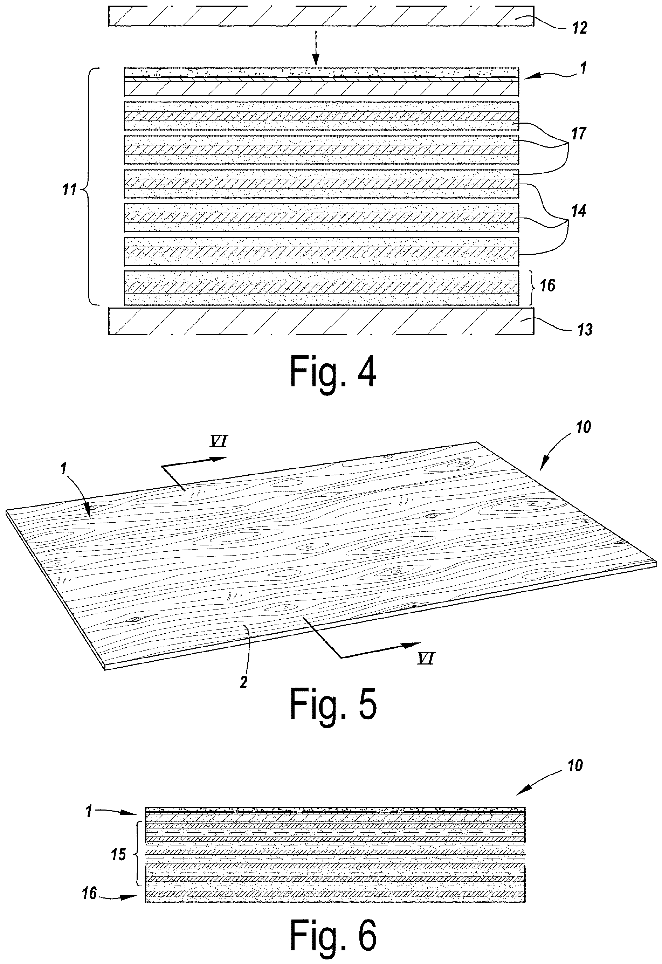

Figure 4 shows a step of a method for manufacturing a decorative panel 10 shown in figures 5 and 6 wherein a stack 11 is formed in a press having an upper press plate 12 and a lower press plate 13. The stack comprises 11 comprises kraft paper foils 14 for forming a substrate 15 of the decorative panel 10, the coated décor paper 1 shown in figures from 1 to 3 and a balancing layer 16.

It is noted that all the foils forming the stack 11 in the press are impregnated with a thermosetting resin composition 17, for example phenol formaldehyde and/or melamine formaldehyde, with the sole exception of the coated décor paper 1 which, in the press 12, is in a non-impregnated condition. The press 12 applies a pressure of 10 - 60 kg/cm² and heat up to a temperature of 165°C to the stack 11 to harden the thermosetting resin composition 17 thereby consolidating the layers together and forming the decorative panel 10. The applied pressure causes the thermosetting resin composition 17 to impregnate the coated décor paper 1.

The present invention is in no way limited to the embodiments described above, but such methods, décor paper and decorative panels may be realized according to several variants without leaving the scope of the invention.

Further, as is clear from the content of the description, the present invention relates to one or more of the items as listed below:
1. A décor paper for decorative panel comprising:
   - a base paper;
   - an ink receiver coating covering at least one surface of said base paper;
   - a decorative pattern printed on said ink receiver coating;
   wherein the décor paper further comprises one or more of the following features:
   - the ink receiver coating is present in a dry weight amount below 2 g/sqm (grams per square meter), preferably below 1 g/sqm;
   - the ink receiver coating is free from pigment or water-absorbing particles, like mineral particles especially silica;
   - the decorative pattern is formed by pigments, preferably organic pigments, and it is formed by a dry weight amount of pigment below 5 g/sqm, more preferably below 3 g/sqm;
   - the base paper is a colored paper;
   - the base paper comprises a mean air resistance, es expressed in Gurley value between 10 and 30 seconds and/or the mean air resistance of the base paper provided with the ink receiver coating can be between 10 and 25 seconds.
2.- The décor paper of item 1, wherein the water absorbing particles which are excluded from the composition of the ink receiver coating are chosen from the list comprising: calcium carbonate, silica, alumina, aluminosilicates, ordered mesoporous materials, modified silica, organosilica, modified organosilica, organoalumina, modified alumina, aluminates, modified aluminates, organoaluminates, modified organoaluminates, zeolites, metal organic frameworks and porous polar polymers.
3.- The décor paper of item 1 or 2, wherein the ink receiver coating can comprise at least a binder and a flocculant.
4.- The décor paper of item 3, wherein for the binder in said ink receiver coating at least or mainly polyvinyl alcohols are used and/or wherein said flocculant can be in form of a metal salt, preferably a cationic metal salt.
5.- The décor paper of item 2 or 3, wherein the ink receiver coating comprises between 20 to 75% weight based on dry weight of flocculant.
6.- The décor paper of any of the preceding items, wherein the pigments forming the decorative pattern can be preferably selected from the group comprising cyan, yellow, magenta, red and black pigment
7.- The décor paper according to item 6, wherein:
   - red pigments are selected from the group comprising: C.I. pigment red 144, C.I. pigment red 254, C.I. pigment red 176, C.I. pigment red 202, C.I. pigment red 207, C.I. pigment violet 19, C.I. pigment violet 32, or mixed crystal thereof; and/or
   - yellow pigments are selected from the group comprising: C.I. pigment yellow 110, C.I. pigment yellow 150, C.I. pigment yellow 93, C.I. pigment yellow 139, C.I. pigment yellow 155, C.I. pigment yellow 181 or a mixed crystal thereof;
   - cyan pigment comprise copper phthalocyanine pigment; and/or
   - black pigment comprises carbon black pigment.
8.- The décor paper according to any of the preceding items, wherein the decorative pattern covers the majority, preferably at least the 70 or at least the 90%, of the surface of the paper.
9.- The décor paper according to any of the preceding items, wherein the color of the paper is configured to reduce the amount of pigment needed to obtain the decorative pattern.
10.- The décor paper according to any of the preceding items, wherein the base paper shows a lightfastness of at least 6 on the blue wool scale according to the ISO 105-B02:2014 or EN438/2.
11.- The décor paper according to any of the preceding items, wherein the base paper comprises a weight between 50 and 120 g/sqm, preferably between 60 and 80 g/sqm, for example 70 g/sqm.
12.- A coated décor paper for decorative panel that comprises a décor paper having a decorative pattern, preferably being according to any of the preceding items, and comprising a protective coating above said decorative pattern wherein, the protective coating shows a thickness of at least 50 microns.
13.- The coated décor paper of item 12, wherein the protective coating can be made of a resin, preferably a curable or cured resin.
14.- The coated décor paper of item 13, wherein the resin can comprise acrylic resin, polyurethane resin or a mixture thereof.
15.- The coated décor paper of any items from 12 to 14, wherein the protective coating comprises UV absorber or UV stabilizers.
16.- The coated décor paper of any items from 12 to 15, wherein the décor paper:
   - is impregnated with a resin, preferably wherein said resin comprises acrylic resin, polyurethane resin, melamine formaldehyde resin or a mixture thereof; and/or
   - comprises UV absorber or UV stabilizers.
17.- A decorative panel comprising a décor paper according to any of items from 1 to 11 and/or a coated décor paper according to items from 12 to 16, and a substrate.
18.- The decorative panel of item 17, wherein the substrate is made of multiple thermosetting resin impregnated kraft paper foils, mineral board, thermoplastic material board, thermosetting material boards, wood-based boards.
19.- The decorative panel of any of items from 17 to 18, that comprises a balancing layer attached to the substrate on an opposite face to the décor paper.
20.- A method for manufacturing a coated décor paper, preferably according to any of the items from 12 to 16, for a decorative panel comprising the steps of providing a décor paper having a decorative pattern, preferably according to any of items from 1 to 11, and the step of providing a protective coating above said decorative pattern.
21. - The method according to item 20, wherein said step of providing the protective coating can comprises coating the décor paper with a liquid composition of the curable resin and then comprises the step of curing said resin, for example by exposure to UV or EB radiation or to heat.
22. - The method according to item 20, wherein the protective coating is provided in the form of sheet or film made by, or treated with, the resin composition.
23.- A method for manufacturing a panel comprising the steps of: forming a stack comprising a substrate, a coated décor paper, preferably according to any of the items from 12 to 16 and optionally a balancing layer, and the step of consolidating said stack into a decorative panel via the application of heat and pressure.
24.- The method according to item 23, wherein said pressing is performed at a temperature between 100 and 200°C, more preferably between 120 and 190°C.
25.- The method according to item 23 or 24, wherein the décor paper can be dry pressed, in the sense that it can be provided in the stack in a non-impregnated form and that receives the resin for bonding with other layers via application of pressure.
26.- The method according to any of items from 20 to 25, wherein the substrate is made of multiple thermosetting resin impregnated kraft paper foils, mineral board, thermoplastic material board, thermosetting material boards, wood-based boards

## Claims

1. A décor paper (3) for decorative panel comprising:
- a base paper (4);
- an ink receiver coating (5) covering at least one surface of said base paper (5);
- a decorative pattern (2) printed on said ink receiver coating (5);
**characterized in that** the décor paper (3) further comprises one or more of the following features:
- the ink receiver coating (5) is present in a dry weight amount below 2 g/sqm (grams per square meter), preferably below 1 g/sqm;
- the ink receiver coating (5) is free from pigment or water-absorbing particles, like mineral particles especially silica;
- the decorative pattern (2) is formed by pigments, preferably organic pigments, and it is formed by a dry weight amount of pigment below 5 g/sqm, more preferably below 3 g/sqm;
- the base paper (4) is a colored paper;
- the base paper (4) comprises a mean air resistance, es expressed in Gurley value between 10 and 30 seconds and/or the mean air resistance of the base paper provided with the ink receiver coating can be between 10 and 25 seconds.

2. - The décor paper (3) of claim 1, **characterized in that** the water absorbing particles which are excluded from the composition of the ink receiver coating (5) are chosen from the list comprising: calcium carbonate, silica, alumina, aluminosilicates, ordered mesoporous materials, modified silica, organosilica, modified organosilica, organoalumina, modified alumina, aluminates, modified aluminates, organoaluminates, modified organoaluminates, zeolites, metal organic frameworks and porous polar polymers.

3. - The décor paper (3) of claim 1 or 2, **characterized in that** the ink receiver coating (5) comprises at least a binder and a flocculant.

4. - The décor paper (3) of claim 3, **characterized in that** for the binder in said ink receiver coating (5) at least or mainly polyvinyl alcohols are used and/or wherein said flocculant is in form of a metal salt, preferably a cationic metal salt.

5. - The décor paper (3) of claim 3 or 4, **characterized in that** the ink receiver coating (5) comprises between 20 to 75% weight based on dry weight of flocculant.

6. - The décor paper (3) of any of the preceding claims, **characterized in that** the pigments forming the decorative pattern (2) are selected from the group comprising cyan, yellow, magenta, red and black pigment

7. - The décor paper (3) according to claim 6, **characterized in that**:
- red pigments are selected from the group comprising: C.I. pigment red 144, C.I. pigment red 254, C.I. pigment red 176, C.I. pigment red 202, C.I. pigment red 207, C.I. pigment violet 19, C.I. pigment violet 32, or mixed crystal thereof; and/or
- yellow pigments are selected from the group comprising: C.I. pigment yellow 110, C.I. pigment yellow 150, C.I. pigment yellow 93, C.I. pigment yellow 139, C.I. pigment yellow 155, C.I. pigment yellow 181 or a mixed crystal thereof; and/or
- cyan pigment comprises copper phthalocyanine pigment; and/or
- black pigment comprises carbon black pigment.

8. - The décor paper (3) according to any of the preceding claims, **characterized in that** the decorative pattern (2) covers the majority, preferably at least the 70 or at least the 90%, of the surface of the paper.

9. - The décor paper (5) according to any of the preceding claims, **characterized in that** the color of the base paper (4) is configured to reduce the amount of pigment needed to obtain the decorative pattern (2).

10. - The décor paper (3) according to any of the preceding claims, **characterized in that** the base paper (4) shows a lightfastness of at least 6 on the blue wool scale according to the ISO 105-B02:2014 or EN438/2.

11. - The décor paper (3) according to any of the preceding claims, **characterized in that** the base paper (4) comprises a weight between 50 and 120 g/sqm, preferably between 60 and 80 g/sqm, for example 70 g/sqm.

12. - A coated décor paper (1) for decorative panel that comprises a décor paper (3) according to any of the preceding claims, and comprising a protective coating (6) above said decorative pattern (2) wherein, the protective coating (6) shows a thickness of at least 50 microns.

13. - The coated décor paper (1) of claims 12, **characterized in that** the protective coating (6) is made of a resin, preferably a curable or cured resin.

14. - The coated décor paper (1) of claims 13, **characterized in that** the resin comprises acrylic resin, polyurethane resin or a mixture thereof.

15. - The coated décor paper (1) of any claims from 12 to 14, **characterized in that** the protective coating (6) comprises UV absorber and/or UV stabilizers.
